# FASCICULE DE BREVET EUROPEEN

(11) **EP 0 578 316 B1**
(45) Date de publication et mention de la délivrance du brevet: **29.04.1998**
(21) Numéro de dépôt: 93201936.7
(22) Date de dépôt: 02.07.1993
(51) Int. Cl.: H04B 7/24, G01S 5/14

(54) **Procédé et système de pointage de deux antennes l'une en direction de l'autre**
Verfahren und Anordnung zur gegenseitigen Ausrichtung zweier Antennen
Method and system for pointing one antenna in the direction of the other

(30) Priorité: 06.07.1992 FR 9208330
(43) Date de publication de la demande: 12.01.1994
(73) Titulaire: SOCIETE FRANCAISE DE PRODUCTION ET DE CREATION AUDIOVISUELLES S.F.P., F-75019 Paris (FR)
(72) Inventeur: Monteil, Serge, F-92350 Le Plessis Robinson (FR); Pichat, Bernard, F-78220 Viroflay (FR)
(74) Mandataire: Martinet & Lapoux

(56) Documents cités:
- EP-A- 0 077 731
- EP-A- 0 444 738

## Description

La présente invention a trait à un procédé et à un système de pointage continu de deux antennes l'une en direction de l'autre afin qu'un signal radioélectrique transmis par l'une des antennes soit reçu avec une puissance maximale par l'autre desdites antennes. Pour des liaisons établies entre antenne émettrice et réceptrice directives, ce pointage est nécessaire afin qu'un faisceau rayonné par l'antenne émettrice soit inclus dans un cône de couverture en réception de l'antenne réceptrice.

Un procédé connu (EP-A-0 077 731) consiste à asservir l'antenne réceptrice par rapport à l'antenne émettrice par mesure de gain de puissance. L'antenne réceptrice est repositionnée de manière continue afin que la puissance qu'elle reçoit soit maximale. Le pointage de ces deux antennes nécessite une liaison radioélectrique à bande étroite de l'antenne réceptrice vers l'antenne émettrice pour transmettre la valeur mesurée de la puissance reçue par l'antenne réceptrice afin de corriger à nouveau son orientation à partir du lieu de l'antenne émettrice.

Un tel procédé, particulièrement avantageux lorsqu'une seule antenne doit être pointée vers un point supposé fixe et lointain, présente l'inconvénient d'une mise en oeuvre beaucoup plus complexe et coûteuse lorsque deux antennes doivent être réorientées de manière continue l'une par rapport à l'autre. Par ailleurs, un tel procédé présente l'inconvénient majeur qu'un "décrochage" du pointage relatif des deux antennes peut conduire à un arrêt durable de la transmission.

Par ailleurs, il est connu d'utiliser un dispositif de Guidage Par Satellite, dit GPS (satellite-based Global Positioning Service), en radionavigation maritime ou aérienne pour son coût avantageusement modéré. Le dispositif GPS détermine ses coordonnées angulaires, longitude et latitude, par rapport à plusieurs satellites géostationnaires. Le principe de base auquel fait appel le dispositif GPS repose sur un calcul de distance par émission d'ondes et réception en écho des ondes émises. Après réception des échos, le dispositif GPS établit les distances respectives le séparant des satellites. En fonction de ces distances respectives et distances angulaires des satellites géostationnaires préalablement mémorisées, le dispositif GPS en extrait sa position terrestre, ce qui permet d'en déduire le cap suivi par l'engin, bateau ou aéronef, à bord duquel est monté le dispositif GPS. En pratique, un nombre (N + 1) de satellites est nécessaire pour positionner le dispositif GPS dans un espace à N dimensions. Ainsi, au sol ou sur mer, seulement trois satellites sont requis pour un positionnement.

En navigation maritime par exemple, l'utilisation du dispositif GPS est la suivante. L'usager du dispositif GPS, connaissant sa position géographique initiale, initialise des valeurs de distances angulaires, latitude et longitude, d'un point géographique final vers lequel il doit se diriger. En dépendance de ces informations initiales en latitude et longitude et de son positionnement à chaque instant par rapport aux satellites, le dispositif GPS détermine continuellement le cap à suivre pour atteindre le point final. Les informations de cap sont fournies à l'usager sous la forme, d'une part, d'une distance et, d'autre part, d'un angle de route par rapport au Nord magnétique. Au moyen d'un compas, l'usager connaît ainsi exactement sa position par rapport au point final à atteindre et donc le cap à suivre.

Le but de l'invention est de mettre en oeuvre un guidage par satellites dans un procédé de pointage d'antennes pour pallier les inconvénients selon la technique antérieure cités initialement dans la description.

A cette fin, un procédé de pointage d'une première antenne orientable dans une station mobile et d'une seconde antenne orientable dans une station fixe ayant une position prédéterminée afin que lesdites antennes soient pointées en permanence l'une vers l'autre lors de déplacement quelconque de la station mobile par rapport à la station fixe,
est caractérisé par les étapes cycliques suivantes :
- dans la station mobile, détermination de premiers paramètres directeurs de la direction de la station mobile vers la station fixe par rapport à une direction de référence en fonction de la position prédéterminée de la station fixe et au moyen d'un dispositif de guidage par satellites, et pointage de la première antenne vers la seconde antenne en fonction des premiers paramètres directeurs quel que soit le cap suivi par la station mobile,
- transmission radioélectrique des premiers paramètres directeurs de la station mobile vers la station fixe, et
- dans la station fixe, pointage de la seconde antenne en direction de la première antenne en fonction de paramètres directeurs déterminant une direction opposée à celle définie par les premiers paramètres directeurs transmis par rapport à la direction de référence (NORD).

Ainsi, selon l'invention, il n'est prévu aucune liaison de transmission à bande étroite de la station fixe vers la station mobile de manière à télécommander par la station fixe l'orientation de la première antenne dans la station mobile en fonction de la position de la station fixe et de la puissance électromagnétique reçue par la seconde antenne.

Selon une réalisation préférée, la station mobile est aéroportée dans un aéronef qui, en pratique, a une position et un cap qui sont variables en permanence. L'invention prévoit que le pointage de la première antenne comprend la détermination de seconds paramètres directeurs du cap suivi par la station mobile par rapport à ladite direction de référence, la détermination de coordonnées angulaires de la direction de la station mobile vers la station fixe par rapport au cap en fonction des premiers et seconds paramètres directeurs, et l'orientation de la première antenne en fonction des coordonnées angulaires.

L'invention a trait également à un système de pointage d'antennes pour la mise en oeuvre du procédé tel que défini ci-dessus. Ce système de pointage comprend
a) dans la station mobile
   a1) un moyen calculateur de guidage par satellites initialisé par des distances angulaires de la position de la station fixe pour calculer les premiers paramètres directeurs,
   a2) des moyens déterminant des seconds paramètres directeurs du cap suivi par la station mobile,
   a3) des moyens pour pointer la première antenne vers la seconde antenne en fonction des premiers et seconds paramètres directeurs, et
   a4) des moyens pour émettre les premiers paramètres directeurs,
b) et dans la station fixe
   b1) des moyens pour recevoir les premiers paramètres directeurs,
   b2) des moyens pour déduire des paramètres directeurs de la direction de la station fixe vers la station mobile opposée à celle définie par les premiers paramètres directeurs par rapport à la direction de référence, et
   b3) des moyens pour pointer la seconde antenne en fonction des paramètres directeurs de ladite direction opposée.

De préférence, lorsque la station mobile est à bord d'un aéronef, tel qu'hélicoptère ou avion, les moyens pour pointer la première antenne comprennent des moyens de commande pour déterminer des coordonnées angulaires de la direction de la station mobile vers la station fixe par rapport audit cap en fonction des premiers et seconds paramètres directeurs, et des moyens gyroscopiques inclus dans la station mobile et supportant la première antenne pour orienter ladite première antenne en fonction desdites coordonnées angulaires.

En particulier, le système de pointage d'antennes selon l'invention peut être introduit dans une installation de télédiffusion destinée non seulement à transmettre plusieurs images prises en direct par des caméras mobiles vers une régie de télévision lors d'une manifestation sportive par exemple, mais également à retransmettre une image finale résultant de mixages des images prises en direct, de la régie vers des récepteurs de télévision mobiles.

Selon l'invention, une telle installation de telédiffusion comprend
- un système de pointage d'antennes selon l'invention dans lequel ladite station mobile est supportée par un aéronef comprenant, en outre, des moyens de réception et d'émission de signaux audiovisuels définissant une zone de couverture au sol, et ladite station fixe est une station fixe de retransmission intermédiaire de télévision comprenant des moyens d'émission et réception de signaux audiovisuels,
- plusieurs moyens mobiles dans ladite zone de couverture pour émettre respectivement plusieurs premiers signaux audiovisuels qui, dans l'aéronef, sont captés par les moyens de réception et d'émission et retransmis par ladite première antenne pointée vers ladite seconde antenne pointée,
- des moyens de régie de télévision éloignés de la station fixe de retransmission intermédiaire pour recevoir lesdits premiers signaux audiovisuels retransmis par les moyens d'émission et réception de la station fixe intermédiaire, et les mélanger en un signal audiovisuel final transmis vers les moyens d'émission et réception de la station fixe, et
plusieurs moyens mobiles dans ladite zone de couverture pour recevoir ledit signal audiovisuel final retransmis par ladite seconde antenne pointée dans la station fixe intermédiaire, reçu par ladite première antenne pointée dans l'aéronef, et diffusé par les moyens de réception et d'émission de l'aéronef.

D'autres caractéristiques et avantages de la présente invention apparaîtront plus clairement à la lecture de la description suivante de plusieurs exemples de réalisation préférés de l'invention, en référence aux dessins annexés correspondants dans lesquels :
- la figure 1 montre schématiquement, à titre d'exemple, une installation de télédiffusion pour une manifestation sportive mettant en oeuvre le procédé selon l'invention;
- les figures 2 et 3 sont des blocs-diagrammes schématiques représentant respectivement deux dispositifs dans un système de pointage pour pointer l'une par rapport à l'autre deux antennes incluses dans l'installation de la figure 1; et
- la figure 4 montre une zone géographique quadrillée en latitude et longitude pour expliquer le fonctionnement du système de pointage de deux antennes l'une par rapport à l'autre.

La retransmission d'une manifestation sportive, telle que course cycliste, rallye automobile, marathon ou course de voiliers, ou plus généralement d'un évènement quelconque dont une zone de couverture, telle que peloton et/ou échappée dans une course cycliste, présentant un intérêt pour des téléspectateurs est mobile, nécessite des moyens conséquents de télédiffusion.

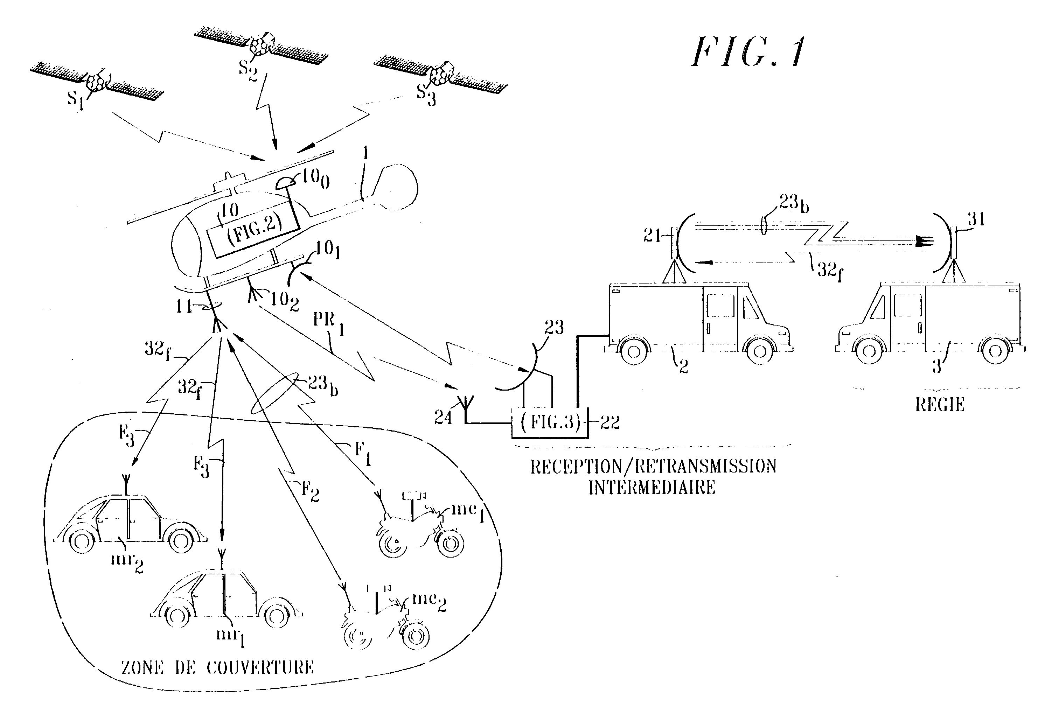

A titre d'exemple, la figure 1 montre un ensemble de moyens transportables mis en oeuvre pour la retransmission télévisée d'une course cycliste. Schématiquement, ces moyens consistent en des moyens d'émission mobiles me₁ et me₂, représentés par des motocyclettes munies de caméra de télévision, situés dans la zone de couverture d'intérêt, une station relais mobile 1 aéroportée dans un hélicoptère ou un avion survolant la zone de couverture, une station de réception/retransmission intermédiaire fixe 2 à bord d'un premier véhicule stationné à une distance relativement lointaine de la station relais 1, et enfin une régie 3 fixe de télévision à bord d'un second véhicule éloigné du premier véhicule.

Les moyens d'émission me₁ et me₂ transmettent de manière continue dans des bandes de fréquences respectives différentes F₁ et F₂ des faisceaux d'images 23b de leurs environnements directs. Ces faisceaux d'images 23b sont reçus par des moyens de réception et d'émission de signaux audiovisuels dans la station 1, représentés schématiquement par une antenne réceptrice-émettrice 11 de la station relais 1 située à proximité des moyens d'émission me₁ et me₂ pour être retransmis tels quels d'une antenne émettrice 10₁ à bord de la station 1 vers une antenne réceptrice 23 de la station de réception/transmission intermédiaire 2. Cette station 2, qui est fixe, comprend une seconde antenne parabolique d'émission/réception 21 qui est pointée en permanence vers une antenne parabolique d'émission/réception 31 de la régie 3. L'antenne 31 reçoit les faisceaux d'images retransmis par la station relais 1 afin que la régie sélectionne et mixe les faisceaux d'images reçus et produise une image finale à retransmettre à travers des moyens de relais de télédiffusion chez les téléspectateurs.

Il est rappelé que le choix d'une bande de fréquence dans une zone géographique donnée d'un pays est réglementé et conditionné par une autorité compétente du pays. Or, les bandes de fréquence autorisées sont relativement restreintes. En revenant à la figure 1, il apparaît que les faisceaux d'images 23b transmis par les moyens d'émission me₁ et me₂ vers la station relais 1 ne présentent pas des caractéristiques pouvant contrevenir à la réglementation précitée concernant l'utilisation de bandes de fréquences sur une zone géographique donnée. En effet, la station relais 1 est située à proximité de la zone de couverture, et donc la puissance d'émission des faisceaux par les moyens d'émission me₁ et me₂ n'est pas particulièrement élevée. Ainsi, la zone géographique "perturbée" par ces faisceaux est relativement peu étendue, et la "perturbation" inhérente à ces faisceaux est de courte durée dans une zone géographique donnée dans le mesure où les moyens me₁ et me₂ et la station 1 sont constamment mobiles.

L'étendue des perturbations électromagnétiques est tout autre pour les faisceaux retransmis par la station relais 1 vers la station de réception/retransmission intermédiaire 2. En effet, la distance séparant les stations 1 et 2 peut être de plusieurs dizaines de kilomètres et la retransmission des faisceaux produits par les moyens d'émission me₁ et me₂, par la station relais 1 vers la station de réception/retransmission intermédiaire pose un problème particulier que vise à résoudre la présente invention. Ce problème particulier se pose par exemple lorsque l'image finale produite par la régie doit être retransmise également vers la zone de couverture à travers la station de réception/retransmission intermédiaire 2 et la station relais 1, en nécessitant une augmentation de la largeur de bande de fréquences.

Cette image finale est retransmise vers des moyens de réception mr₁ et mr₂ dont la mobilité est circonscrite dans la zone de couverture de la manifestation sportive. Ainsi, des voitures officielles dotées de récepteurs de télévision, supportant les moyens de réception mr₁ et mr₂ et suivant la manifestation sportive recoivent alors directement et en permanence l'image finale après mixage dans la régie, même lorsque les voitures sont localisées dans des zones d'ombre du réseau de télédiffusion vers les téléspectateurs. Cette image finale est associée à un faisceau d'image 23b qui est transmis d'abord de l'antenne 31 vers l'antenne 21, puis de l'antenne 23 de la station de réception/retransmission intermédiaire 2 vers l'antenne 10₁ de la station relais 1, les antennes 23 et 10₁ étant des antennes bidirectionnelles émettrice-réceptrice selon l'invention. En pratique, chacune des antennes 10₁ et 11 peut être composée d'une antenne émettrice et d'une antenne réceptrice distinctes, assignées à des bandes de fréquence différentes. Les deux antennes composant l'antenne 10₁ sont alors commandées de manière strictement identique dans le cadre du procédé de pointage selon l'invention. Puis ce faisceau d'image finale 32f est diffusé par l'antenne 11 de la station 1 vers les moyens de réception mr₁ et mr₂ et vient s'ajouter aux faisceaux transmis par les moyens d'émission me₁ et me₂. Compte-tenu de la réglementation régissant la répartition des bandes de fréquence dans des zones géographiques limitées et du fait que des faisceaux sont transmis de l'antenne 10₁ de la station relais 1 vers l'antenne 23 de la station de réception/retransmission intermédiaire 2 et inversement, il est donc nécessaire d'utiliser des antennes directives 10₁ et 23 tant dans la station relais 1 que dans la station de réception/retransmission intermédiaire 2.

Il est supposé ci-après que la station relais 1, bien que généralement située à une altitude supérieure à celle de la station 2, est sensiblement à la même altitude, à quelques centaines de mètres près, que la station de réception/retransmission intermédiaire 2, ce qui constitue une approximation tout à fait acceptable puisque la distance séparant les stations 1 et 2 est très grande comparativement à l'altitude réelle de la station relais 1, telle qu'hélicoptère. L'homme du métier appréciera néanmoins à la lecture de la description qui suit que l'invention n'est pas limitée à une telle réalisation et que les procédé et système selon l'invention peuvent être mis en oeuvre non seulement pour des orientations en termes d'azimut, ou de gisement, des deux antennes 23 et 10₁ mais également de site pour des pointages tridimensionnels.

Toujours en référence à la figure 1, la station relais 1 est mobile, et l'antenne émettrice/réceptrice 10₁ qui lui est associée est mobile par rapport à la station relais 1. L'antenne réceptrice/émettrice 23 associée à la station de réception/retransmission intermédiaire 2 est également mobile par rapport au sol.

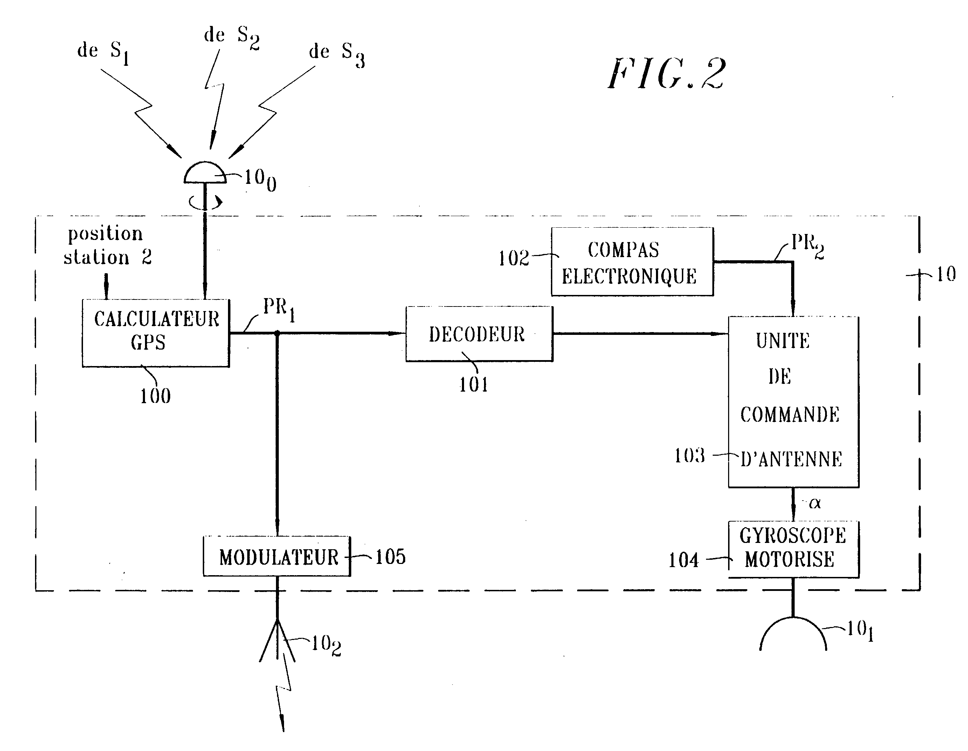

Avant de détailler le fonctionnement du système selon l'invention en référence aux figures 2, 3 et 4, les éléments essentiels constitutifs de l'invention sont présentés ci-après.

La station relais mobile 1 comprend un dispositif 10 mettant en oeuvre en outre le procédé de guidage par satellite (GPS). Le dispositif 10 possède une antenne à balayage mécanique ou électronique 10₀ qui est pointée en direction du ciel pour capter des faisceaux d'émission de trois satellites géostationnaires prédéterminés S₁, S₂ et S₃. Le dispositif 10 extrait à chaque instant sa position précise grâce au procédé GPS décrit initialement dans la description. Le dispositif 10 est initialisé en y mémorisant la position en termes de latitude et longitude de la station intermédiaire fixe 2 supportant l'antenne 23. Ainsi, en fonction des positions de la station relais mobile 1 et de la station de réception/retransmission intermédiaire 2, sont déduits par le dispositif 10 des paramètres directeurs PR₁ de la direction de la station mobile 1 vers la station fixe 2 par rapport au Nord magnétique. En liaison avec un compas électronique à bord de la station mobile 1 indiquant l'orientation de celle-ci par rapport au Nord magnétique, le dispositif 10 établit la direction de la station mobile 1 vers la station fixe 2 en terme d'angle α par rapport à l'orientation de la station relais 1. L'antenne 10₁ est alors commandée pour pointer dans cette direction. Par ailleurs, les paramètres directeurs PR₁ codés sont modulés et transmis via une liaison radioélectrique à bande étroite entre une antenne émettrice 10₂ et une antenne réceptrice 24 respectivement associées aux stations mobile 1 et fixe 2. Un dispositif 22 inclus dans la station fixe 2 décode les paramètres directeurs PR₁ captés par l'antenne 24. Des paramètres directeurs décodés PR₁ sont déduits des paramètres directeurs pr₁ de la direction opposée de la station fixe 2 vers la station mobile 1 afin que l'antenne 23 soit pointée automatiquement vers l'antenne 10₁.

En référence aux figures 2, 3 et 4, le système de pointage selon une réalisation préférée de l'invention comprend les deux dispositifs de pointage distincts 10 et 22 qui sont respectivement associés à un support de l'antenne 10₁ mobile par rapport à la station relais 1, et à un support reposant sur le sol, déplaçant en site et azimut l'antenne 23 de la station de réception/retransmission intermédiaire 2.

En référence à la figure 2, le dispositif 10 associé à la station mobile 1 comprend, d'une part, une antenne à balayage pour réception de faisceau satellite 10₀, un calculateur GPS 100, un décodeur 101, un compas électronique 102, une unité de commande d'antenne 103 et un gyroscope motorisé 104 et, d'autre part, des moyens d'émission de premiers paramètres directeurs PR₁ comprenant un modulateur 105 et l'antenne émettrice 10₂.

Comme déjà dit, le calculateur GPS 100 recevant des ondes émises par les satellites S₁, S₂ et S₃ est à même de connaître la position géographique précise de la station relais mobile 1. Par ailleurs, ce calculateur 100 est initialisé par les distances angulaires traduisant la position géographique de la station de réception/retransmission intermédiaire 2, en termes de latitude et de longitude.

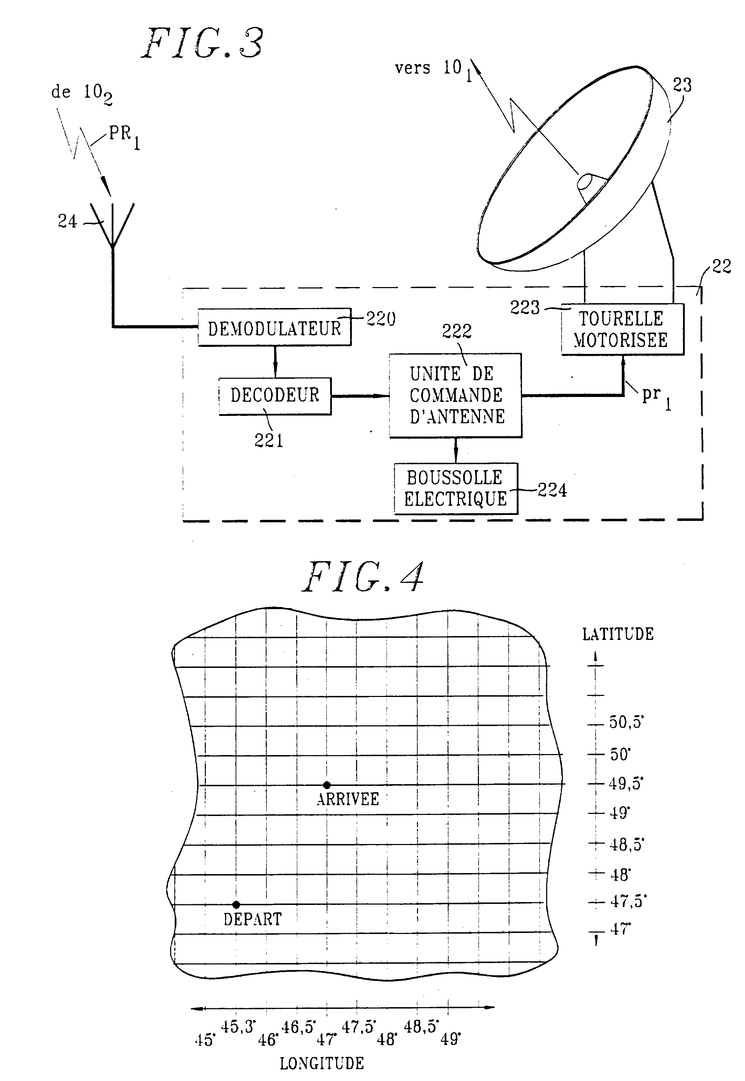

Comme montré dans la figure 4, selon le procédé de guidage par satellite (GPS), l'usager connaissant sa position de DEPART, initialise le calculateur GPS sur sa position d'ARRIVEE souhaitée. Le calculateur GPS fournit en permanence le cap à suivre par rapport au Nord magnétique pour atteindre cette position d'ARRIVEE. Dans le cadre de la présente invention, la position de DEPART est la position de la station relais mobile 1 qui est déterminée de manière continue par le calculateur GPS 100, et les coordonnées géographiques du point d'ARRIVEE introduites préalablement en mémoire dans le calculateur sont celles de la position de la station fixe de réception/retransmission intermédiaire 2.

Le calculateur 100 calcule ainsi en permanence les paramètres directeurs PR₁ de la direction de la station 2 vers la station 1 par rapport à une direction de référence orientée vers le Nord magnétique et code les paramètres PR₁ en un signal codé. Ce signal codé est appliqué, d'une part, à une entrée du décodeur 101 et, d'autre part, à une entrée du modulateur 105. Le décodeur 101 décode le signal codé en des paramètres directeurs numérisés qui sont appliqués à un port d'entrée de l'unité de commande d'antenne 103. Un second port d'entrée de cette unité de commande reçoit également sous forme numérique, des seconds paramètres directeurs PR₂ de l'orientation de la station relais mobile 1 par rapport au Nord magnétique au moyen du compas électronique 102. Ces seconds paramètres PR₂ indiquent, pour une station relais constituée par un aéronef, l'orientation longitudinale ou cap suivi par l'aéronef par rapport au Nord magnétique. L'unité de commande 103 déduit les coordonnées angulaires α de la direction de la station 1 vers la station 2 par rapport au cap de la station relais 1 en fonction des paramètres PR₁ et PR₂. Le gyroscope 104 pointe ainsi en permanence suivant la direction définie par ces coordonnées angulaires α, afin que l'antenne 10₁ supportée par le plateau du gyroscope soit continuellement pointée vers l'antenne fixe 23, quel que soit le cap suivi par la station relais mobile 1.

Le signal codé de paramètres directeurs PR₁ est modulé dans le modulateur 105 pour être transmis par l'antenne 10₂ et diffusé vers l'antenne 24 de la station fixe 2. Les antennes 10₂ et 24 sont des antennes non directives, se présentant par exemple sous la forme de longues vergues, qui sont classiquement utilisées pour de la transmission radio à bande étroite entre mobiles.

Comme montré à la figure 3, le dispositif de pointage 22 comprend un démodulateur 220, un décodeur 221, une unité de commande d'antenne 222, une tourelle motorisée 223 orientable en site et azimut et supportant l'antenne 23, et une boussole électrique 224.

Le signal reçu par l'antenne 24 est appliqué à une entrée de l'unité de commande 222 à travers le démodulateur 220 et le décodeur 221. Ainsi, l'unité 222 reçoit un signal décodé identique à celui appliqué à l'unité de commande 103 dans le dispositif de pointage 10 de la station mobile 1. Le signal décodé est représentatif des paramètres directeurs PR₁, c'est-à-dire de l'orientation de la direction de la station 1 vers la station 2 par rapport au Nord magnétique.

Ces paramètres décodés PR₁ ont ainsi une signification précise dans la station au sol 2, sachant que la même direction de référence, le Nord magnétique, est indiquée par la boussole électrique 224. Pour une direction donnée en azimut et site de la tourelle 223, l'unité de commande déduit des paramètres PR₁ les paramètres directeurs pr₁ de la direction opposée de la station fixe 2 vers la station mobile 1, et en pratique, des valeurs corrigées en site et azimut de l'orientation de l'antenne 23 de manière que celle-ci soit en permanence en visée directe avec l'antenne 10₁ de la station relais mobile 1.

Selon une autre variante, les antennes 10₁ et 10₂ dans la station mobile 1 sont toutes deux montées sur le plateau du gyroscope motorisé 104, et/ou les antennes 23 et 24 sont toutes deux montées sur la tourelle motorisée 223 de la station fixe intermédiaire 2.

Selon encore une autre variante, les antennes 10₂ et 24 sont supprimées. La liaison radioélectrique entre ces deux antennes est remplacée par un canal de transmission de premiers paramètres directeurs PR₁ qui est multiplexé en fréquence avec des signaux d'image télévisée provenant des faisceaux 23b et retransmis dans la station mobile 1, en un signal multiplexé en fréquence émis par l'antenne 10₁. Dans la station intermédiaire fixe 2, le signal multiplexé est capté par l'antenne 23 et démultiplexé en fréquence en un signal de paramètre PR₁ à appliquer au démodulateur 220 et en un signal d'image à retransmettre par l'antenne 21.

## Revendications

1. Procédé de pointage d'une première antenne (10₁) orientable dans une station mobile (1) et d'une seconde antenne (23) orientable dans une station fixe (2) ayant une position prédéterminée afin que lesdites antennes soient pointées en permanence l'une vers l'autre lors de déplacement quelconque de la station mobile par rapport à la station fixe,
caractérisé par les étapes cycliques suivantes :
- dans la station mobile, détermination de premiers paramètres directeurs (PR₁) de la direction de la station mobile (1) vers la station fixe (2) par rapport à une direction de référence (NORD) en fonction de la position prédéterminée de la station fixe (1) et au moyen d'un dispositif de guidage par satellites (100, GPS), et pointage de la première antenne (10₁) vers la seconde antenne (23) en fonction des premiers paramètres directeurs quel que soit le cap (PR₂) suivi par la station mobile,
- transmission radioélectrique des premiers paramètres directeurs (PR₁) de la station mobile (1) vers la station fixe (2), et
- dans la station fixe, pointage de la seconde antenne (23) en direction de la première antenne (10₁) en fonction de paramètres directeurs (pr₁) déterminant une direction opposée à celle définie par les premiers paramètres directeurs transmis (PR₁) par rapport à la direction de référence (NORD).

2. Procédé conforme à la revendication 1, caractérisé en ce que le pointage de la première antenne (10₁) comprend la détermination de seconds paramètres directeurs (PR₂) du cap suivi par la station mobile (2) par rapport à ladite direction de référence (NORD), la détermination de coordonnées angulaires (α) de la direction de la station mobile (1) vers la station fixe (2) par rapport au cap en fonction des premiers et seconds paramètres directeurs (PR₁, PR₂), et l'orientation de la première antenne (10₁) en fonction des coordonnées angulaires (α).

3. Procédé conforme à la revendication 1 ou 2, caractérisé en ce que ladite transmission desdits premiers paramètres directeurs (PR₁) est réalisée au moyen de deux antennes (10₂, 24) respectivement associées aux stations mobile (1) et fixe (2) et distinctes desdites première et seconde antennes (10₁, 23).

4. Procédé conforme à la revendication 1 ou 2, caractérisé en ce que ladite transmission desdits premiers paramètres directeurs est réalisée au moyen desdites première et seconde antennes (10₁, 23) par multiplexage d'un canal supportant lesdits premiers paramètres directeurs avec un canal d'informations transmis de ladite première antenne (10₁) vers ladite seconde antenne (23).

5. Système de pointage d'antennes pour la mise en oeuvre du procédé conforme à l'une quelconque des revendications 1 à 4, comprenant
a) dans la station mobile (1)
a1) un moyen calculateur de guidage par satellites (100) initialisé par des distances angulaires de la position de la station fixe (2) pour calculer les premiers paramètres directeurs (PR₁),
a2) des moyens (102) déterminant des seconds paramètres directeurs (PR₂) du cap suivi par la station mobile (1),
a3) des moyens (103, 104) pour pointer la première antenne (10₁) vers la seconde antenne (23) en fonction des premiers et seconds paramètres directeurs (PR₁, PR₂), et
a4) des moyens (105, 10₂) pour émettre les premiers paramètres directeurs (PR₁),
b) et dans la station fixe (2)
b1) des moyens (24, 220, 221) pour recevoir les premiers paramètres directeurs (PR₁),
b2) des moyens (222, 224) pour déduire des paramètres directeurs (pr₁) de ladite direction de la station fixe (2) vers la station mobile (1) opposée à celle définie par les premiers paramètres directeurs (PR₁) par rapport à la direction de référence (NORD), et
b3) des moyens (223) pour pointer la seconde antenne (23) en fonction des paramètres directeurs (PR₁) de ladite direction opposée.

6. Système conforme à la revendication 5, dans lequel les moyens pour pointer la première antenne comprennent des moyens de commande (103) pour déterminer des coordonnées angulaires (α) de la direction de la station mobile (1) vers la station fixe (2) par rapport audit cap en fonction des premiers et seconds paramètres directeurs (PR₁, PR₂), et des moyens gyroscopiques inclus dans la station mobile (1) et supportant la première antenne (10₁) pour orienter ladite première antenne (10₁) en fonction desdites coordonnées angulaires (α).

7. Système conforme à la revendication 5 ou 6, dans lequel
les moyens pour émettre dans la station mobile (1) comprennent un moyen de modulation (105) recevant sous forme codée lesdits premiers paramètres directeurs (PR₁) qui sont également appliqués aux moyens pour pointer la première antenne (103, 104) par le moyen calculateur (100) à travers un moyen de décodage (101), et une antenne d'émission (10₂) pour émettre les premiers paramètres directeurs modulés par le moyen de modulation, et
les moyens pour recevoir dans la station fixe (2) comprennent une antenne de réception (24) captant les premiers paramètres directeurs modulés, et des moyens de démodulation et décodage pour démoduler et décoder les premiers paramètres modulés captés en des premiers paramètres démodulés et décodés appliqués aux moyens pour produire (222, 224).

8. Système conforme à la revendication 7 lorsqu'elle dépend de la revendication 6, dans lequel les moyens gyroscopiques supportent l'antenne d'émission (10₂), et/ou l'antenne de réception est liée à la seconde antenne (23) pour être pointée avec celle-ci par les moyens pour pointer (223) dans la station fixe (2).

9. Système conforme à la revendication 7 lorsqu'elle dépend de la revendication 6, dans lequel la première antenne (10₁) fait également office de ladite antenne d'émission (10₂), et la seconde antenne (23) fait également office de ladite antenne de réception (24).

10. Installation de télédiffusion comprenant :
- un système de pointage d'antennes conforme à l'une quelconque des revendications 5 à 9 dans lequel ladite station mobile (1) est supportée par un aéronef comprenant, en outre, des moyens de réception et d'émission de signaux audiovisuels (11) définissant une zone de couverture au sol, et ladite station fixe (2) est une station fixe de retransmission intermédiaire de télévision comprenant des moyens d'émission et réception de signaux audiovisuels (21),
- plusieurs moyens (me₁, me₂) mobiles dans ladite zone de couverture pour émettre respectivement plusieurs premiers signaux audiovisuels (23b) qui, dans l'aéronef (1), sont captés par les moyens de réception et d'émission (11) et retransmis par ladite première antenne pointée (10₁) vers ladite seconde antenne pointée (23),
- des moyens de régie de télévision (3) éloignés de la station fixe de retransmission intermédiaire (2) pour recevoir lesdits premiers signaux audiovisuels (23b) retransmis par les moyens d'émission et réception (21) de la station fixe intermédiaire (2), et les mélanger en un signal audiovisuel final (23b) transmis vers les moyens d'émission et réception (21) de la station fixe (2), et
plusieurs moyens (mr₁, mr₂) mobiles dans ladite zone de couverture pour recevoir ledit signal audiovisuel final (23b) retransmis par ladite seconde antenne pointée (23) dans la station fixe intermédiaire (2), reçu par ladite première antenne pointée (10₁) dans l'aéronef, et diffusé par les moyens de réception et d'émission (11) de l'aéronef.

## Patentansprüche

1. Verfahren zur Ausrichtung einer ersten Schwenkantenne (10₁) in einer beweglichen Station (1) und einer zweiten Schwenkantenne (23) in einer festen Station (2), die eine vorbestimmte Position hat, damit diese Antennen bei beliebigen Bewegungen der beweglichen Station relativ zur festen Station ständig aufeinander gerichtet sind,
gekennzeichnet durch die folgenden periodisch wiederkehrenden Schritte:
- in der beweglichen Station: Bestimmung von ersten Richtparametern (PR₁) der Richtung der beweglichen Station (1) zur festen Station (2) relativ zu einer Bezugsrichtung (NORD) in Abhängigkeit von der vorbestimmten Position der festen Station (1) und mittels einer Satellitenleitvorrichtung (100, GPS), und Richten der ersten Antenne (10₁) auf die zweite Antenne (23) in Abhängigkeit von den ersten Richtparametern, welches auch immer der Kurs (PR₂) sein mag, dem die bewegliche Station folgt,
- drahtlose Übertragung der ersten Richtparameter (PR₁) von der beweglichen Station (1) zur festen Station (2), und
- in der festen Station: Richten der zweiten Antenne (23) in Richtung auf die erste Antenne (10₁) in Abhängigkeit von Richtparametern (pr₁), die eine Richtung festlegen, die der entgegengerichtet ist, die von den übertragenen ersten Richtparametern (PR₁) relativ zur Bezugsrichtung (NORD) definiert wird.

2. Verfahren nach Patentanspruch 1, dadurch gekennzeichnet, daß das Richten der ersten Antenne (10₁) die Bestimmung von zweiten Richtparametern (PR₂) des von der beweglichen Station (2) verfolgten Kurses relativ zur genannten Bezugsrichtung (NORD) umfaßt, die Bestimmung von Winkel koordinaten (α) der Richtung der beweglichen Station (1) zur festen Station (2) relativ zum Kurs in Abhängigkeit von den ersten und zweiten Richtparametern (PR₁, PR₂), und das Ausrichten der ersten Antenne (10₁) in Abhängigkeit von den Winkelkoordinaten (α).

3. Verfahren nach Patentanspruch 1 oder 2, dadurch gekennzeichnet, daß die genannte Übertragung der genannten ersten Richtparameter (PR₁) mittels zweier Antennen (10₂, 24) erfolgt, die mit der beweglichen Station (1) bzw. der festen Station (2) verbunden sind und von den genannten ersten und zweiten Antennen (10₁, 23) verschieden sind.

4. Verfahren nach Patentanspruch 1 oder 2, dadurch gekennzeichnet, daß die genannte Übertragung der genannten ersten Richtparameter mittels der genannten ersten und zweiten Antenne (10₁, 23) durch Multiplexing eines Kanals, der diese ersten Richtparameter trägt, mit einem Kanal für Informationen dieser ersten Antenne (10₁) zur zweiten Antenne (23) erfolgt.

5. System zum Richten von Antennen zur Ausführung des Verfahrens nach irgendeinem der Patentansprüche 1 bis 4, umfassend
a) in der beweglichen Station (1)
a1) ein Rechnermittel für die Satellitennavigation (100), das mit Winkelabständen der Position der festen Station (2) initialisiert ist, um die ersten Richtparameter (PR₁) zu berechnen,
a2) Mittel (102) zur Bestimmung der zweiten Richtparameter (PR₂) des von der beweglichen Station (1) verfolgten Kurses,
a3) Mittel (103, 104), um die erste Antenne (10₁) in Abhängigkeit von den ersten und zweiten Richtparametern (PR₁, PR₂) auf die zweite Antenne (23) zu richten, und
a4) Mittel (105, 10₂) zum Senden der ersten Richtparameter (PR₁),
b) und in der festen Station (2)
b1) Mittel (24, 220, 221) zum Empfangen der ersten Richtparameter (PR₁),
b2) Mittel (222, 224) zum Ableiten von Richtparametern (pr₁) für die genannte Richtung der festen Station (2) zur beweglichen Station (1), die derjenigen entgegengesetzt ist, die durch die ersten Richtparameter (PR₁) relativ zur Bezugsrichtung (NORD) definiert ist, und
b3) Mittel (223), um die zweite Antenne (23) in Abhängigkeit von den Richtparametern (PR₁) dieser entgegengesetzten Richtung auszurichten.

6. System nach Patentanspruch 5, in dem die Mittel zum Richten der ersten Antenne Steuermittel (103) umfassen, um Winkelkoordinaten (α) der Richtung der beweglichen Station (1) zur festen Station (2) relativ zum genannten Kurs in Abhängigkeit von den ersten und zweiten Richtparametern (PR₁, PR₂) zu bestimmen, und Kreiselmittel, die in der beweglichen Station (1) enthalten sind und die erste Antenne (10₁) tragen, um diese erste Antenne (10₁) in Abhängigkeit von den Winkelkoordinaten (α) auszurichten.

7. System nach Patentanspruch 5 oder 6, in dem
die Sendemittel in der beweglichen Station (1) ein Modulationsmittel (105) umfassen, das in kodierter Form die genannten ersten Richtparameter (PR₁) empfängt, die auch durch das Rechnermittel (100) über ein Dekodiermittel (101) an die Mittel zum Ausrichten der ersten Antenne (103, 104) angelegt sind, und eine Sendeantenne (10₂), um die durch das Modulationsmittel modulierten ersten Richtparameter zu senden, und
die Empfangsmittel in der festen Station (2) eine Empfangsantenne (24) umfassen, die die modulierten ersten Richtparameter empfängt, und Demodulations- und Dekodiermittel zum Demodulieren und Dekodieren der empfangenen modulierten ersten Parameter in demodulierte und dekodierte erste Parameter, die an die Mittel zum Ableiten (222, 224) angelegt werden.

8. System nach Patentanspruch 7, wenn er von Patentanspruch 6 abhängig ist, in dem die Kreiselmittel die Sendeantenne (10₂) tragen und/oder die Empfangsantenne mit der zweiten Antenne (23) verbunden ist, um von den Mitteln zum Ausrichten (223) in der festen Station (2) mit dieser zweiten Antenne gerichtet zu werden.

9. System nach Patentanspruch 7, wenn er von Patentanspruch 6 abhängig ist, in dem die erste Antenne (10₁) ebenfalls die Rolle der genannten Sendeantenne (10₂) spielt und die zweite Antenne (23) ebenfalls die der genannten Empfangsantenne (24).

10. Fernsehsendeanlage, umfassend:
- ein System zur Ausrichtung von Antennen nach irgendeinem der Patentansprüche 5 bis 9, in dem die genannte bewegliche Station (1) von einem Luftfahrzeug getragen wird, das außerdem Mittel zum Empfang und zum Senden audiovisueller Signale (11) enthält, die einen Deckungsbereich auf dem Boden definieren, und die genannte feste Station (2) eine feste Fernsehumsetzstation ist, die Sende- und Empfangsmittel für audiovisuelle Signale (21) enthält,
- mehrere bewegliche Mittel (me₁, me₂) im genannten Deckungsbereich, um jeweils erste audiovisuelle Signale (23b) zu senden, die im Luftfahrzeug (1) von den Empfangs- und Sendemitteln (11) empfangen und über die genannte erste Richtantenne (10₁) der genannten zweiten Richtantenne (23) übermittelt werden,
- von der festen Umsetzstation (2) ferne Fernsehregiemittel (3), um die genannten ersten audiovisuellen Signale (23b) zu empfangen, die von den Sende- und Empfangsmitteln (21) der festen Umsetzstation (2) übermittelt wurden, und sie zu einem endgültigen audiovisuellen Signal (23b) zu mischen, das an die Sende- und Empfangsmittel (21) der festen Station (2) gesendet wird, und
- mehrere bewegliche Mittel (mr₁, mr₂) im genannten Deckungsbereich, um das genannte endgültige audiovisuelle Signal (23b) zu empfangen, das von der genannten zweiten Richtantenne (23) in der festen Umsetzstation (2) übermittelt und von der genannten ersten Richtantenne (10₁) im Luftfahrzeug empfangen und von den Empfangs- und Sende mitteln (11) des Luftfahrzeugs gesendet wurde.

## Claims

1. A method of aiming a first antenna (10₁) capable of orientation in a mobile station (1) and a second antenna (23) capable of orientation in a stationary station (2) having a predetermined position so that the said antennas are permanently aimed towards one another on any movement of the mobile station relatively to the stationary station,
characterised by the following cyclic steps:
- in a movable station, determination of first director parameters (PR₁) of the direction of the mobile station (1) towards the stationary station (2) with respect to a reference direction (NORTH) in accordance with the predetermined position of the stationary station (1) and by means of a satellite guidance system (100, GPS), and aiming the first antenna (10₁) towards the second antenna (23) in accordance with the first director parameters irrespective of the course (PR₂) followed by the mobile station,
- radio transmission of the first director parameters (PR₁) of the mobile station (1) towards the stationary station (2), and
- in the stationary station, aiming the second antenna (23) in the direction of the first antenna (10₁) in accordance with director parameters (pr₁) determining a direction opposed to that defined by the first transmitted director parameters (PR₁) with respect to the reference direction (NORTH).

2. A method according to claim 1, characterised in that the aiming of the first antenna (10₁) comprises determining second director parameters (PR₂) of the course followed by the mobile station (2) with respect to the said reference direction (NORTH), determination of angular co-ordinates (α) of the direction of the mobile station (1) towards the stationary station (2) with respect to the course in accordance with the first and second director parameters (PR₁, PR₂) and orientation of the first antenna (10₁) in accordance with the angular co-ordinates (α).

3. A method according to claim 1 or 2, characterised in that the said transmission of the said first director parameters (PR₁) is effected by means of two antennas (10₂, 24) respectively associated with the mobile station (1) and the stationary station (2) and separate from the said first and second antennas (10₁, 23).

4. A method according to claim 1 or 2, characterised in that the said transmission of the said first director parameters is effected by means of the said first and second antennas (10₁, 23) by multiplexing of a channel supporting the said first director parameters with a channel of data transmitted from the said first antenna (10₁) to the said second antenna (23).

5. An antenna aiming system for performing the method according to any one of claims 1 to 4, comprising:
a) in the mobile station (1)
a1) a satellite guidance computer means (100) initialised by angular distances of the position of the stationary station (2) for computing the first director parameters (PR₁),
a2) means (102) for determining the second director parameters (PR₂) of the course followed by the mobile station (1),
a3) means (103, 104) for aiming the first antenna (10₁) towards the second antenna (23) in accordance with the first and second director parameters (PR₁, PR₂), and
a4) means (105, 10₂) for transmitting the first director parameters (PR₁),
b) and in the stationary station (2)
b1) means (24, 220, 221) for receiving the first director parameters (PR₁),
b2) means (222, 224) for deducing director parameters (pr₁) of the said direction of the stationary station (2) towards the mobile station (1) opposed to that defined by the first director parameters (PR₁) with respect to the reference direction (NORTH), and
b3) means (223) for aiming the second antenna (23) in accordance with the director parameters (PR₁) of the said opposite direction.

6. A system according to claim 5, wherein the means for aiming the first antenna comprise control means (103) for determining angular co-ordinates (α) of the direction of the mobile station (1) towards the stationary station (2) with respect to the said course in accordance with the first and second director parameters (PR₁, PR₂), and gyroscope means included in the mobile station (1) and supporting the first antenna (10₁) to orient the said first antenna (10₁) in accordance with the said angular co-ordinates (α).

7. A system according to claim 5 or 6, wherein
the transmission means in the mobile station (1) comprise a modulation means (105) receiving in encoded form the said first director parameters (PR₁) which are also applied to the means for aiming the first antenna (103, 104) by the computer means (100) via a decoding means (101), and a transmission antenna (10₂) for transmitting the first director parameters modulated by the modulation means, and
the receiving means in the stationary station (2) comprise a reception antenna (24) picking up the modulated first director parameters, and demodulation and decoding means for demodulating and decoding the first modulated parameters picked up into demodulated and decoded first parameters applied to the production means (222, 224).

8. A system according to claim 7 when dependent on claim 6, wherein the gyroscope means support the transmission antenna (10₂), and/or the reception antenna is linked to the second antenna (23) in order to be aimed with it by the aiming means (223) in the stationary station.

9. A system according to claim 7 when dependent on claim 6, wherein the first antenna (10₁) also acts as the said transmission antenna (10₂) and the second antenna (23) also acts as the said reception antenna (24).

10. A television broadcasting installation comprising:
- an antenna aiming system in accordance with any one of claims 5 to 9 wherein the said mobile station (1) is supported by an aircraft which also comprises reception and transmission means for audio-visual signals (11) defining a coverage zone on the ground, and the said stationary station (2) is a stationary station for intermediate television retransmission comprising transmission and reception means for audio-visual signals (21),
- a plurality of means (me₁, me₂) mobile in the said coverage zone for respectively transmitting a plurality of first audio-visual signals (23b) which, in the aircraft (1), are picked up by the reception and transmission means (11) and retransmitted by the said first antenna (10₁) aimed towards the said second aimed antenna (23),
- television control means (3) remote from the stationary intermediate retransmission station (2) for receiving the said first audio-visual signals (23b) retransmitted by the said transmission and reception means (21) of the stationary intermediate station (2), and mixing them to form a final audio-visual signal (23b) transmitted towards the transmission and reception means (21) of the stationary station (2), and
- a plurality of means (mr₁, mr₂) mobile in the said coverage zone to receive the said final audio-visual signal (23b) retransmitted by the said second aimed antenna (23) in the stationary intermediate station (2), received by the said first aimed antenna (10₁) in the aircraft, and broadcast by the aircraft reception and transmission means (11).
